# EUROPEAN PATENT APPLICATION

(11) **EP 0 844 108 A1**
(43) Date of publication of application: **27.05.1998**
(21) Application number: 97203688.3
(22) Date of filing: 25.11.1997
(51) Int. Cl.: B60C 11/16

(54) **Tyre for motor vehicles and the like, with projecting or retracting elements for gripping the ground**

(30) Priority: 26.11.1996 IT MI962469
(71) Applicant: Idea S.r.l., Dalmine (Bergamo) (IT)
(72) Inventor: Grossi, Lucio, Bergamo (IT)
(74) Representative: Raimondi, Alfredo, Dott. Ing. Prof.

(57) **Abstract**

Tyre (10;100) for wheels of motor vehicles and the like comprising a casing with tread (11) having metal bars (14) radially inserted inside it and a pressure chamber for supporting the load bearing on the tyre itself, wherein the tyre (10; 1000) has arranged inside it an annular membrane (15; 115) designed to divide said chamber into a first tubular cavity (16) and into at least one second cavity (17; 117) concentric with the first one, which cavities may be alternately supplied with or drained of a fluid under pressure via associated supply means (40) and distribution means (30, 32; 30, 132c, 115a) so as to cause a free end (14b) of said bars (14) to project from or be retracted into the surface of the tread (11), even when the vehicle is in movement.

## Description

The present invention relates to a tyre for wheels of motor vehicles and the like which contain, radially inserted in the tread, metal elements, the free end of which is able to project from or retract into the tread also during the travelling movement, said elements being able to translated in both directions by means of fluid under pressure.

It is known how, when the roads are covered with snow and/or ice, the wheels of vehicles must be fitted with auxiliary means designed to increase the grip of the tyres during travel on the road surface when, for example, it is made slippery by snow, ice, greasy products and the like.

Said auxiliary means may consist of so-called snow chains, which have various known designs intended to facilitate as far as possible mounting/removal of them onto/from the wheel of the vehicle itself at the time when they are required.

Alternatively so-called snow tyres are known, in which a suitable number of steel studs are retained in the tread so as to remain projecting and ensure gripping on the ice when they pressed by the tyre during rotation.

Both the aforementioned means, although solving the problem of adherence to the ground in said conditions, nevertheless have the drawback consisting in the impossibility of eliminating continuous use thereof when, for example, it is required to travel along sections of road covered with snow and/or ice and other sections of road where the surface, on the other hand, is normally clear.

In the case of chains, in fact, it is possible to remove them when they are no longer required, but the user is obliged to stop the vehicle and perform complicated operations; in the case of snow tyres it is not even possible to eliminate the studs unless the entire wheel is changed.

The technical problem of the present invention is therefore that of providing a tyre for wheels of motor vehicles, which can be provided with anti-slip means for snow and/or ice, which means must be able to be activated or deactivated as required, without having to stop the travel movement of the vehicle itself and by means of operations performed inside the vehicle.

These results are obtained according to the present invention by a tyre for motor vehicles and the like comprising a casing with tread having metal bars radially inserted inside it and a pressure chamber for supporting the load bearing on the tyre itself, wherein the tyre has arranged inside it an annular membrane designed to divide said chamber into a first tubular cavity and into at least one second cavity concentric with the first one, which cavities may be alternately supplied with or drained of a fluid under pressure via associated supply means and distribution means so as to cause a free end of said bars to project from or be retracted into the surface of the tread, even when the vehicle is in movement.

Further details may be obtained from the following description, with reference to the accompanying drawings, in which:
Figure 1 shows a schematic cross-sectional view of a first embodiment of the tyre according to the present invention with bars retracted inside the casing;
Figure 2 shows the tyre according to Fig. 1 with the free end of the bars projecting outside the casing;
Figure 3 shows the tyre according to Fig. 1 with separate piping for the two annular cavities;
Figure 4 shows a schematic cross-section through a second embodiment of the tyre according to the invention with the bars retracted inside the casing;
Figure 5 shows the tyre according to Fig. 4 with the free end of the bars projecting outside the casing; and
Figure 6 shows a cross-section along the plane indicated by VI-VI in Fig. 5;

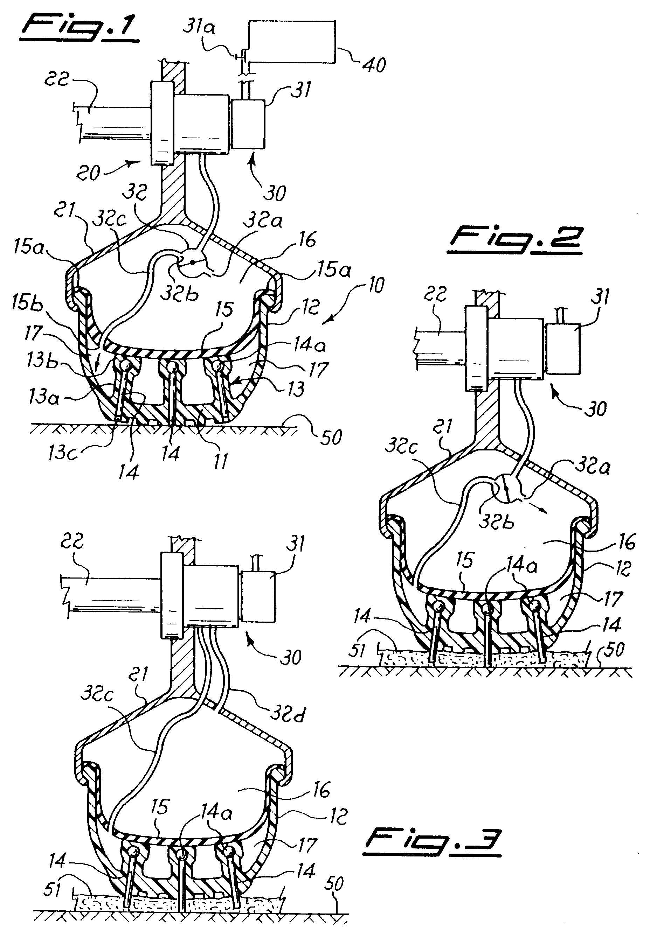

As shown in Figure 1, the tyre 10 according to the invention is mounted on the rim 21 of a wheel 20 rotating on the axle 22 of a motor vehicle not shown.

The tyre 10 comprises a casing with central tread 11 and side walls 12 for fastening to the rim 21 of the wheel.

On the inner side of the tread 11 there are formed extensions 13 made of resilient material and arranged in a substantially radial direction; each of said extensions is formed as a tapered body 13a and a head-piece 13b.

Each extension 13 has moreover a longitudinal seat 11a which has inserted inside it a metal bar 14 with the inner end 14a rounded and enlarged so as to prevent the bar emerging from the axial seat 11a as a result of the centrifugal force which is generated inside the same during rotation of the wheel.

The head 13b of each extension 13 is in solid contact with the resilient membrane 15, the opposite ends 15b of which are attached to the corresponding ends of the said walls 12 of the tyre for securing to the rim 21 of the wheel, so as to define a first cavity 16 which is sealed with the rim 21 and a second cavity 17 which is sealed with the inner side of the tyre.

The membrane 15 also has a through-hole 15a which connects the two said cavities 16 and 17.

According to the invention, means 30 for controlling and operating the bars 14 so that they project from and retract inside the tyre are also provided, said means comprising a rotatable connection 31 situated on the hub of the wheel, to which a fluid under pressure consisting, for example, of compressed air taken from a tank or the like 40 of the car is supplied, said connection being able to be activated by means of an associated button 31a or the like arranged inside the car.

This connection 31 allows air under pressure to be sent to a valve 32 which is located inside the tyre and which has two outlets 32a and 32b which are respectively connected to the first cavity 16 formed by the membrane 15 and the rim 21 and to the second cavity 17 formed between the membrane 15 and the tyre 10.

In the example of the figures, said outlet 32b of the valve 32 is connected to the cavity 17 by means of a pipe 32c which passes through the hole 15a of the membrane 15.

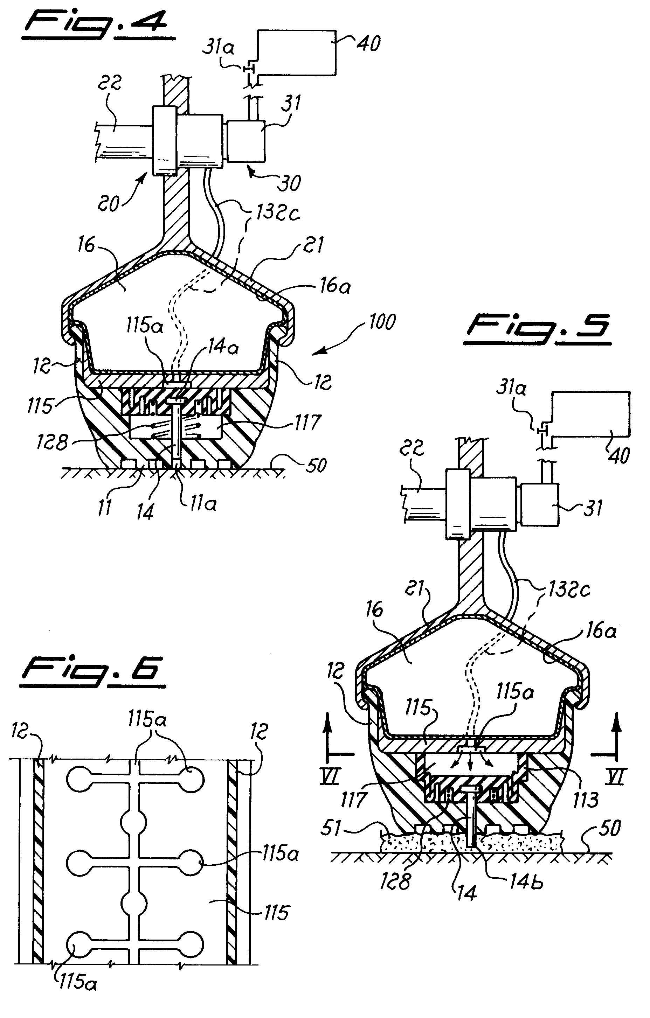

Figure 3 shows how supplying of the fluid to the two cavities 16 and 17 may also be performed by means of two separate pipes 32c, 32d which are respectively connected to the cavity 16, to the cavity 17 and to the distribution group 30 which, in this case, may have housed inside it the valve controlling opening and closing of the ducts themselves.

Figure 4 shows a second example of embodiment of the tyre 100 according to the invention.

As in the previous case, the tyre 100 is mounted on a rim 21 of a wheel 20 rotatable on the axle 22 of a motor vehicle (not shown).

The tyre 100 comprises a casing with the tread 11 for contact with the road surface and side walls 12 for fastening to the rim 21 of the wheel.

Said rim 21 and casing have formed in it a cavity 16 which is able to contain an air chamber 16a or which may be sealed in the case of a tyre without an inner tube, which is commonly referred to as "tubeless".

The inner part of the tread 11 has formed in it a series of cavities 117, each of which houses a shaped element 113 made of deformable material, such as rubber or the like, containing in the centre a metal bar 14, the inner end 14a of which is enlarged so as to prevent it coming out of its seat in the element 113 as a result of the centrifugal force to which it is subjected during rotation of the wheel itself and the body of which is housed in a longitudinal seat 11a of the tread 11.

Each element 113 is retained in its cavity 117 by an annular membrane 115 which, in turn, is sealed with the inside of the casing and forms, among other things, an element reacting against the thrusting action of a spring 128 coaxial with the bar 14 and acting on the resilient element 113 so as to push it in the direction of the axle, against the action of the centrifugal force of the wheel, thereby retaining the bar 14 inside the seat 11a of the tread 11.

In this embodiment it is envisaged that the pipe 132c supplying the fluid under pressure from the generating means 40,31 should be connected to the ducts 115a (Figs. 5 and 6) formed in the membrane 115 and emerging opposite each cavity 117.

The mode of operation of the tyre according to the invention and in the embodiment realized in Figs. 1 and 2 is as follows:

In normal conditions of the road 50 (Fig. 1), the compressed air introduced into the tyre results in a pressure inside the cavity 17 which is greater than the pressure of the cavity 16, so that (Fig. 1) the extensions 13 extend towards the inside, the bars 14 are retracted inside the tread 11 and retained by the head 14a. The tread is therefore able to adhere normally to the road 50.

When the road 50 is slippery since covered by ice or the like 51 (Fig. 2), the connection 31 is activated so as to send compressed air to the two-way valve 32, which air supplies the cavity 16 by means of the duct 32a.

At the same time the duct 32c is discharged towards the valve 32 so that the increase in pressure inside the cavity 16 and the simultaneous proportional reduction in pressure inside the cavity 17 causes extension of the membrane 15 and compression of the resilient extensions 13 which push the respective bar 14 outwards so that, penetrating into the slippery layer 51, they ensure the necessary grip. The same result is obtained by connecting the two cavities using separate pipes, as illustrated in Fig. 3.

In the second embodiment shown in Figs. 4 and 5, operation of the tyre according to the invention is substantially similar to that of the first embodiment, differing only in the fact that, under normal conditions, the bars 14 are retained inside the tread 11 by the deformable element 113 biased towards the axle of the wheel by the spring 128, in opposition to the action of the centrifugal force, while in the case where it is required to cause the free end 14b of the bars 14 to project from the tread 11, it is possible to activate, also from inside the vehicle, sending of the fluid under pressure which, via the pipe 132c and the ducts 115a, enters into the cavities 117 so as to overcome the action of the spring 128 and deform the resilient element 113 outwards, thereby causing the free end 14a to emerge from the tread 11 and gripping of the tyre on the travel surface formed by the ice 51 which covers the ground 50.

When this auxiliary gripping action on the travel surface is no longer required, the pressure is discharged from the ducts 115a,132c so that the bars 14 are pushed towards the axle of the wheel by the action of the associated springs 128, allowing normal travel of the vehicle. According to the invention it is therefore possible to cause operation of the bars so that they project or retract in accordance with the temporary requirements resulting from the state of the road or the like; in particular a further application of the subject-matter of the present invention may also consist in the use thereof in association with the known brake controlling devices referred to by the abbreviation "ABS/ATS" for controlling the stability of the vehicle even when there is no snow or ice.

## Claims

1. Tyre (10;100) for wheels (20) of motor vehicles and the like comprising a casing with tread (11) having metal bars (14) radially inserted inside it and a pressure chamber for supporting the load bearing on the tyre itself, characterized in that the tyre (10; 100 ) has arranged inside it an annular membrane (15; 115) designed to divide said chamber into a first tubular cavity (16) and into at least one second cavity (17; 117) concentric with the first one, which cavities may be alternately supplied with or drained of a fluid under pressure via associated supply means (40) and distribution means (30, 32; 30, 132c, 115a) so as to cause a free end (14b) of said bars (14) to project from or be retracted into the surface of the tread (11), even when the vehicle is in movement.

2. Tyre (10) according to Claim 1, characterized in that said membrane (15) divides the said chamber into a first annular cavity (16) and into a second annular cavity (17).

3. Tyre (10) according to Claim 2, characterized in that said casing (11) has extensions (13) radially directed towards the inside of the second annular cavity (17) and resiliently deformable along their longitudinal axis.

4. Tyre (10) according to Claim 3, characterized in that said extensions (13) have a cavity (11a) forming the seat for housing said bars (14).

5. Tyre (10) according to Claim 2, characterized in that said membrane (15) is resiliently deformable and is contact with the inner end of said extensions (13) of the tread (11).

6. Tyre (10) according to Claim 2, characterized in that said membrane (15) is provided with a through-hole (15a).

7. Tyre according to Claim 2, characterized in that said fluid distribution means pass through said hole (15a) of the membrane (15).

8. Tyre according to Claims 1 and 2, characterized in that said fluid distribution means consist of a pipe (32,32c) intercepted by a three-way valve (32b) designed to cause circulation of the fluid supplied by the means (40, 31) alternately from one to the other of said two annular cavities (16,17).

9. Tyre according to Claim 8, characterized in that said three-way valve is housed inside the tyre.

10. Tyre according to Claim 1, characterized in that said fluid distribution means consist of two separate pipes (32c,32d) connected to a cavity of the tyre and to the rotating valve (31).

11. Tyre (100) according to Claim 1, characterized in that said tread (11) has a plurality of internal cavities (117) formed in the thickness thereof.

12. Tyre (100) according to Claim 11, characterized in that said cavities (117) have housed inside them resiliently deformable elements (113).

13. Tyre (100) according to Claim 11, characterized in that said elements (113) have internal cavities forming the housing of said bars (14).

14. Tyre (100) according to Claim 11, characterized in that each of said cavities (117) has arranged inside it a resilient means (128) located between the deformable element (113) and the tread (11) so as to bias said deformable elements (113) towards the axle of the wheel.

15. Tyre (100) according to Claim 11, characterized in that said cavities (117) are closed on the inner side of the tyre by an annular membrane (115) sealed with the tyre itself.

16. Tyre (100) according to Claim 15, characterized in that said annular membrane (115) has channels (115a) formed in its thickness and forming the ducts for distribution of the fluid under pressure to the individual cavities (117) of the bars (14).

17. Tyre according to Claim 1, characterized in that the inner part of said metal bars is formed with an enlarged head designed to retain the bars themselves inside the casing in opposition to the centrifugal force generated by rotation of the wheel.

18. Tyre according to Claim 1, characterized in that said fluid is compressed air.

19. Tyre according to Claim 1, characterized in that said means (40) supplying the fluid comprise at least one source of compressed air, and one tank and one rotating valve (31) which can be operated externally.

20. Tyre according to Claim 1, characterized in that operating means (31a) are provided for supplying the fluid under pressure to the tyre, said means being arranged inside the motor car.
